# FASCICULE DE BREVET EUROPEEN

(11) **EP 1 496 294 B1**
(45) Date de publication et mention de la délivrance du brevet: **05.07.2006**
(21) Numéro de dépôt: 03102089.4
(22) Date de dépôt: 10.07.2003
(51) Int. Cl.: F16J 15/34

(54) **Dispositif d'étanchéité pour palier, et turbomachine équipée d'un tel dispositif**
Dichtungsvorrichtung für ein Wellenlager und Turbomaschine mit einer solchen Vorrichtung
Sealing device for a shaft bearing and turbomachine having such a device

(43) Date de publication de la demande: 12.01.2005
(73) Titulaire: Techspace Aero, 4041 Milmort Herstal (BE); MICROTURBO SA, 31200 Toulouse (FR)
(72) Inventeur: Tran, Quac Hung, 4020, LIEGE (BE); Squire, John, GL11 5PF, DURSLEY GLOS. (GB); Alary, Jean Paul, PO14 4PB, TITCHFIELD COMMON (GB)
(74) Mandataire: Poulin, Gérard

(56) Documents cités:
- US-A- 2 679 412
- US-A- 2 857 182
- US-A- 3 062 554
- US-A- 5 464 227
- US-A- 5 658 127

## Description

### DOMAINE TECHNIQUE

La présente invention se rapporte au domaine technique des paliers, du type comportant une enceinte contenant de l'huile et une enceinte contenant de l'air, De tels paliers sont notamment utilisés pour supporter un arbre de turbomachine tournant à grande vitesse, c'est-à-dire à une vitesse de l'ordre de ou supérieure à 40000 tr/mn.

L'invention vise en particulier un dispositif d'étanchéité pour de tels paliers, ledit dispositif d'étanchéité étant placé à la séparation entre l'enceinte contenant de l'huile et l'enceinte ne contenant que de l'air.

L'invention vise aussi une turbomachine équipée d'un tel dispositif d'étanchéité.

### ETAT DE LA TECHNIQUE ANTERIEURE

Un dispositif d'étanchéité pour palier d'arbre tournant de la technique antérieure est divulgué dans le document US 2 857 182.

Le palier comporte une bague intérieure de palier supportant un arbre et une bague extérieure de palier solidaire d'un carter. Ce dispositif d'étanchéité comporte :
- une première bague et une deuxième bague, entraînées en rotation avec l'arbre, la première bague étant agencée entre la deuxième bague et la bague intérieure de palier, et la première bague se trouvant en regard d'une cavité d'huile annulaire du carter,
- un joint d'étanchéité, solidaire d'une pièce fixe entourant la deuxième bague, le joint d'étanchéité étant maintenu au contact de la première bague,
- un circuit d'huile pour alimenter en huile de lubrification une interface de friction entre le joint d'étanchéité et la première bague, le circuit d'huile comportant au moins un canal d'injection pour joint amenant de l'huile de lubrification depuis une face radialement intérieure de la première bague jusqu'à l'interface de friction entre ladite première bague et lejoint d'étanchéité, le canal d'injection pour joint comportant une dérivation qui débouche du côté du palier.

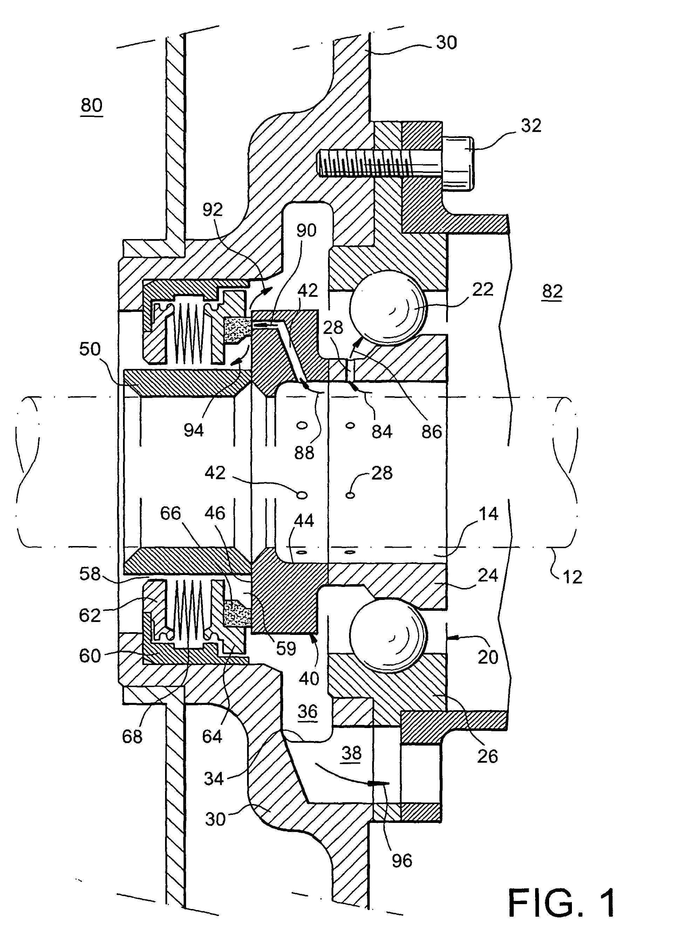

Un autre dispositif d'étanchéité pour palier d'arbre tournant conforme à la technique antérieure est illustré sur la figure 1.

Un arbre 12 (représenté en traits mixtes) définissant une direction axiale est supporté en rotation par un palier 20 à billes, les billes 22 étant placées entre une bague intérieure de palier 24, entraînée en rotation avec l'arbre 12, et une bague extérieure de palier 26, solidaire d'un carter 30, par l'intermédiaire de moyens de fixation appropriés tels que des vis 32. Des canaux d'injection pour billes 28 sont prévus à travers la bague intérieure 24 pour injecter de l'huile vers les billes 22 à l'intérieur du palier 20, l'huile provenant d'un jeu circonférentiel 14 existant entre l'arbre 12 et la bague intérieure 24.

Le dispositif d'étanchéité comporte une première bague 40 et une deuxième bague 50 toutes deux entraînées en rotation avec l'arbre 12. La première bague 40 est disposée entre la bague intérieure du roulement 24 et la deuxième bague 50, et est fixée rigidement a chacune d'entre elles, par des moyens usuels non représentés, de sorte que les trois bagues 24, 40, 50 tournent ensemble avec l'arbre 12. Le jeu circonférentiel 14 existant entre la bague intérieure 24 et l'arbre 12 se prolonge entre la première bague 40 et l'arbre 12, le long d'une partie au moins d'une face périphérique intérieure de ladite première bague 40.

En regard de la première bague 40, le carter 30 présente une gorge annulaire 34 qui définit une cavité d'huile annulaire 36 autour de la première bague 40.

En regard de la deuxième bague 50, et entourant celle-ci, se trouve une bague support 60 qui est fixée au carter 30 par des moyens de fixation appropriés (non-représentés). Une première coupelle annulaire fixe 62 est supportée par la bague support 60 et s'étend radialement vers l'intérieur vers la deuxième bague 50 à partir de la bague support 60. Une seconde coupelle mobile 64 est supportée par la bague support 60 et s'étend radialement vers l'intérieur vers la deuxième bague 50 à partir de la bague support 60. Elle est apte à se déplacer axialement entre la première coupelle 62 et la première bague 40.

La seconde coupelle annulaire 64 présente un logement annulaire orienté vers la première bague 40, dans lequel est reçu un joint d'étanchéité annulaire 66 fait en un matériau relativement dur, comme par exemple un joint en carbone ou un joint en céramique.

Entre la deuxième bague 50 et chacune des coupelles annulaires 62, 64 est défini un jeu circonférentiel 58, qui débouche dans une chambre d'air annulaire 59 délimitée par la seconde coupelle 64, le joint d'étanchéité 66, et la deuxième bague 50.

Entre la première coupelle fixe 62 et la seconde coupelle axialement mobile 64 est disposé un moyen de rappel étanche, comme par exemple un ressort à soufflets 68, qui s'appuie sur la première coupelle fixe 62 et exerce une force sur la seconde coupelle axialement mobile 64 de telle manière que le joint d'étanchéité 66 soit appliqué contre une face radiale 46 de la première bague 40.

Du fait que le joint d'étanchéité 66 est maintenu fixe et que la première bague 40 est mobile en rotation autour de l'arbre 12, l'interface entre ledit joint d'étanchéité 66 et ladite première bague 40 est une interface de friction, qui est lubrifiée par de l'huile provenant du jeu circonférentiel 14 par l'intermédiaire d'un circuit d'huile comprenant une pluralités de canaux d'injection pour joint 42 ménagés dans l'épaisseur de la première bague 40. Lesdits canaux d'injection pour joint 42 débouchent d'une part sur la face périphérique intérieure de la première bague 40 et d'autre part sur la face radiale 46 de ladite première bague 40, au niveau de l'interface de friction.

On va maintenant décrire le fonctionnement et les inconvénients du système de palier intégrant le dispositif d'étanchéité pour palier selon la technique antérieure, en se référant à la figure 1.

Le repère 80 désigne l'enceinte ne contenant que de l'air, et le repère 82 désigne l'enceinte contenant de l'huile et de l'air, qui intègre notamment le roulement 20 et la cavité d'huile annulaire 36. L'huile de lubrification qui se trouve dans le jeu circonférentiel 14 est aspirée dans les canaux d'injection pour billes 28, comme l'indique la flèche 84, et va lubrifier les billes 22, comme l'indique la flèche 86. Elle est également aspirée par les canaux d'injection pour joint 42, comme l'indique la flèche 88, et va lubrifier l'interface de friction entre le joint d'étanchéité 66 et la face radiale 46 de la première bague 40, comme l'indique la flèche 90. Au niveau de l'interface de friction, l'huile est principalement évacuée radialement vers l'extérieur, sous l'effet des forces centrifuges, comme l'indique la flèche 92, dans la cavité d'huile annulaire 36 où elle se retrouve séparée de l'air par centrifugation, sous la forme de gouttelettes. Ensuite, ces gouttelettes d'huile sont collectées et réunies dans la gorge annulaire 34, puis l'huile est évacuée vers l'enceinte contenant de l'huile 82, par l'intermédiaire de passages 38 traversant le carter 30 et la bague extérieure de roulement 26, et répartis circonférentiellement.

Mais une partie résiduelle de l'huile qui lubrifie l'interface de friction est également évacuée radialement vers l'intérieur, sous l'effet des forces centripètes, comme l'indique la flèche 94, dans la chambre d'air annulaire 59, qui fait partie de l'enceinte contenant de l'air 80. Cette évacuation radialement intérieure de l'huile dans une chambre destinée à ne contenir que de l'air se traduit par des fuites d'huile indésirables, qui se produisent notamment lors d'un fonctionnement au ralenti, à la pression inverse, ou au régime transitoire.

Un inconvénient du dispositif d'étanchéité selon la technique antérieure réside dans le fait que ces fuites d'huile sont préjudiciables aux performances du palier 20. Elles peuvent provoquer des balourds de l'arbre 12, eux-mêmes susceptibles d'entraîner des usures prématurées de pièces, voire même des détériorations. Ces fuites d'huile ont également pour conséquence d'augmenter la consommation d'huile et de provoquer une pollution atmosphérique pendant le fonctionnement de la turbomachine.

### EXPOSÉ DE L'INVENTION

La présente invention se propose de surmonter les inconvénients du dispositif d'étanchéité pour palier de la technique antérieure.

Un but de la présente invention est de supprimer les fuites d'huile entre l'enceinte contenant de l'huile et de l'air et l'enceinte ne contenant que de l'air par l'intermédiaire de l'interface de friction entre le joint d'étanchéité et la première bague.

Selon l'invention, le dispositif d'étanchéité pour un palier est réalisé selon l'objet de la revendication indépendante 1.

De préférence, la distance entre la première face de la collerette radiale et ladite paroi de carter environnant est supérieure à une distance minimale donnée.

De préférence, ladite distance entre la première face de la collerette radiale et la paroi de carter environnant est inférieure à une distance maximale donnée.

De préférence, ledit circuit d'huile comporte au moins un canal d'injection pour joint amenant de l'huile de lubrification depuis une face radialement intérieure de la première bague jusqu'à l'interface de friction entre ladite première bague et le joint d'étanchéité, ledit canal d'injection pour joint comportant une dérivation qui débouche du côté du palier,

De préférence, la collerette radiale est sensiblement tronconique, sa deuxième face étant inclinée de telle sorte qu'elle se rapproche axialement du joint d'étanchéité au fur et à mesure qu'elle s'éloigne radialement de l'arbre.

De préférence, la collerette radiale présente des trous de décharge traversants répartis circonférentiellement, qui permettent un passage d'air entre sa première face et sa deuxième face.

Selon un aspect complémentaire de l'invention, la deuxième bague comporte des parties en saillie, réparties circonférentiellement sur sa face périphérique extérieure au voisinage de la première bague.

De préférence, lesdites parties en saillie sont en contact avec la première bague.

Selon un autre aspect, l'invention concerne une turbomachine comportant au moins un tel dispositif d'étanchéité

### BRÈVE DESCRIPTION DES DESSINS

L'invention sera mieux comprise à la lecture de la description détaillée qui va suivre de modes de réalisation particuliers de l'invention, fournis à titre illustratif et nullement limitatif, en référence aux dessins annexés, dans lesquels :
- la figure 1, déjà décrite, illustre un dispositif d'étanchéité conforme à la technique antérieure, et
- la figure 2 illustre un dispositif d'étanchéité conforme à l'invention,
- la figure 3 est une vue partiellement agrandie de la figure 2, illustrant plus particulièrement le fonctionnement du dispositif d'étanchéité conforme à l'invention.

### EXPOSÉ DÉTAILLÉ DE MODES DE RÉALISATION PARTICULIERS

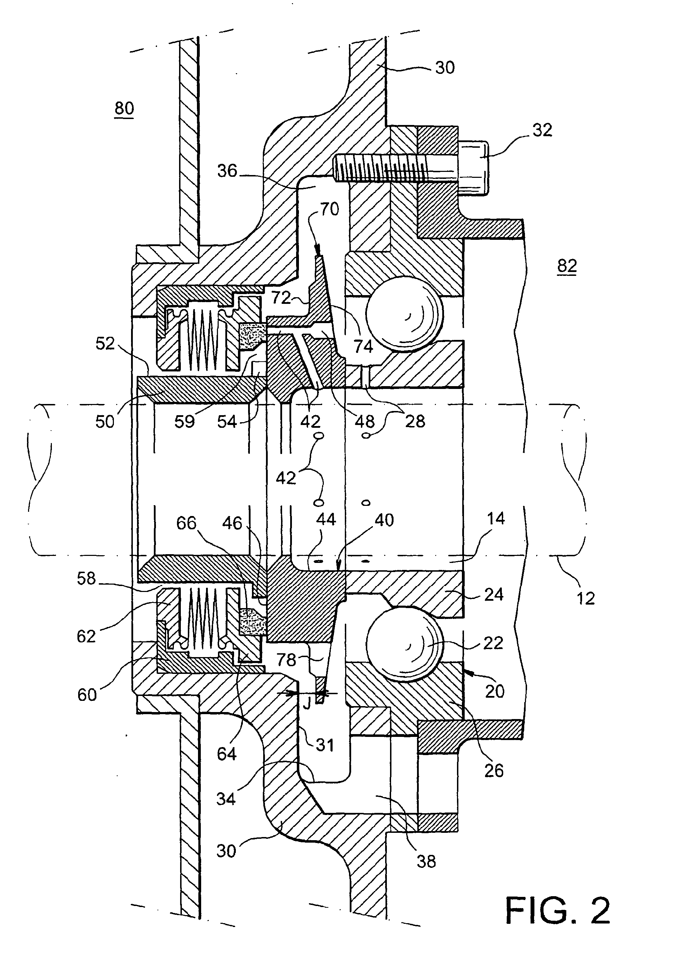

Sur la figure 2, les éléments qui sont identiques à ceux qui ont déjà été décrits en référence à la figure 1 sont désignés par les mêmes repères qu'à la figure 1, et leur description ne sera pas répétée.

Conformément à l'invention, la première bague 40 est prolongée radialement vers l'extérieur par une collerette radiale 70 dont l'extrémité libre est globalement dirigée vers la gorge annulaire 34. Cette collerette radiale 70 présente une première face 72 dirigée du côté du joint d'étanchéité 66 et une deuxième face 74 dirigée du côté du palier 20. Ladite deuxième face 74 se trouve sensiblement opposée à ladite première face 72, selon la direction axiale de l'arbre 12.

La première face 72 de ladite collerette radiale 70 se trouve en regard d'une paroi intérieure 31 de la cavité d'huile annulaire 36 faisant partie du carter 30. La distance entre ladite première face 72 et ladite paroi intérieure 31 constitue un jeu J.

La collerette radiale 70 présente une forme sensiblement tronconique, sa deuxième face 74 étant inclinée de telle manière qu'elle se rapproche axialement du joint d'étanchéité 66 au fur et à mesure qu'elle s'éloigne radialement de l'arbre 12.

La collerette radiale 70 présente des trous de décharge traversants 78 qui sont orientés sensiblement parallèlement à la direction axiale de l'arbre, et répartis circonférentiellement sur ladite collerette radiale 70.

Le circuit d'huile ménagé dans l'épaisseur de la première bague 40 comporte une pluralité de canaux d'injection pour joint 42. D'une manière analogue aux canaux de la technique antérieure, ces canaux d'injection pour joint 42 débouchent d'une part sur la face périphérique intérieure de la première bague 40, pour aspirer de l'huile provenant du jeu circonférentiel 14, et d'autre part sur la face radiale 46 de ladite première bague 40 pour alimenter en huile l'interface de friction entre le joint d'étanchéité 66 et ladite première bague 40. De plus, conformément à l'invention, lesdits canaux d'injection pour joint 42 comportent également une dérivation 48 qui débouche sur la deuxième face 74 de la collerette radiale 70 dans la cavité d'huile annulaire 36.

Selon aspect complémentaire de la présente invention, la deuxième bague comporte des parties en saillie 54, réparties circonférentiellement sur la face extérieure 52 de ladite deuxième bague 50.

De préférence, ces parties en saillie 54 sont agencées sur un bord de la deuxième bague 50, de manière à se trouver au contact de la première bague 40.

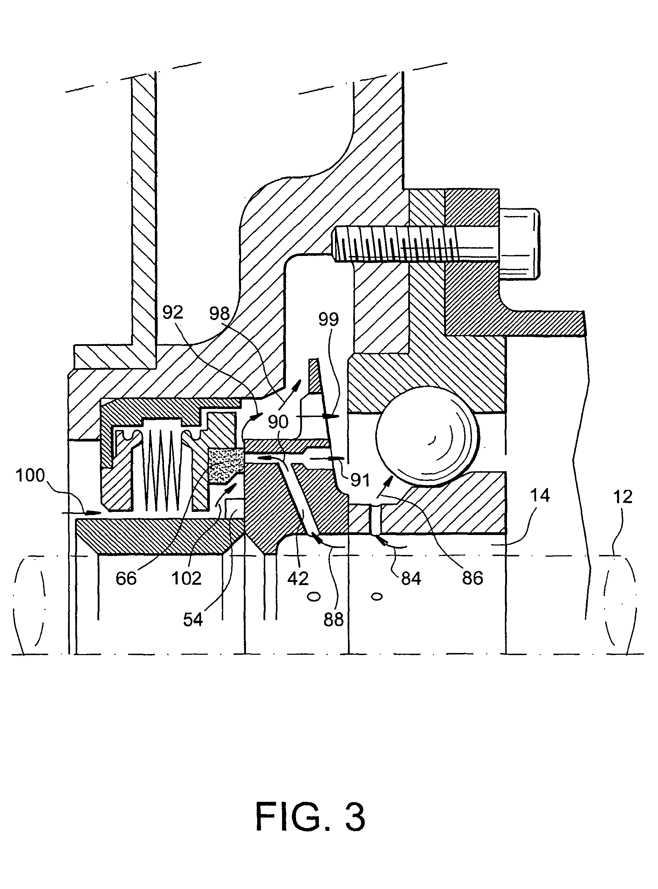

On va maintenant décrire le fonctionnement et les avantages du système de palier intégrant le dispositif d'étanchéité pour palier selon l'invention, en se référant à la figure 3 et à la figure 2 pour les repères non repris sur la figure 3 :
- tout d'abord en ce qui concerne l'invention : perfectionnement apporté à la première bague 40,
- puis en ce qui concerne un aspect complémentaire de l'invention perfectionnement apporté à la deuxième bague 50.

D'une manière analogue au fonctionnement du système de palier de la technique antérieure, l'huile de lubrification qui se trouve dans le jeu circonférentiel 14 est aspirée par les canaux d'injection pour joint 42, comme l'indique la flèche 88, et va lubrifier l'interface de friction entre le joint d'étanchéité 66 et la face radiale 46 de la première bague 40, comme l'indique la flèche 90.

Dans le même temps, en présence d'une première bague 40 selon le premier aspect de l'invention, le trop-plein d'huile de lubrification qui alimente l'interface de friction est évacué par la dérivation 48, et sort dans la cavité d'huile annulaire 36 au niveau de la deuxième face 74 de la collerette radiale 70, comme l'indique la flèche 91. Cette évacuation du trop-plein d'huile alimentant l'interface de friction a pour avantage d'éviter les fuites vers la chambre d'air 59, en fournissant à l'huile un autre parcours. Elle a aussi pour avantage d'évacuer la chaleur dissipée au niveau de l'interface de friction.

L'huile de lubrification ainsi évacuée par la dérivation 48 dans la cavité d'huile annulaire 36, entre la deuxième face 74 de la collerette radiale 70 et le palier 20, se trouve alors sous forme de gouttelettes d'huile, séparées de l'air par centrifugation.

Au niveau de l'interface de friction, l'huile est principalement évacuée radialement vers l'extérieur, sous l'effet des forces centrifuges, comme l'indique la flèche 92, dans la cavité annulaire 36, entre la première face 72 de la collerette radiale 70 et la paroi intérieure 31 du carter 30. L'huile se trouve sous la forme de gouttelettes séparées de l'air par centrifugation. Ces gouttelettes d'huile sont ventilées à travers le jeu J, comme l'indique la flèche 98, par une circulation d'air de fuite provenant du jeu circonférentiel 58, (flèche 100), en passant par la chambre d'air 59 (flèche 102) et par l'interface de friction entre le joint d'échantéité 66 et la face radiale 46 de la première bague 40 (flèche 92).

Le jeu J est dimensionné de manière appropriée. Il est supérieur à un jeu minimal Jmin donné, grâce à quoi la ventilation de l'huile à travers ce jeu J peut se faire correctement, car on évite le temps de séjour de l'huile dans la gorge annulaire 34 au niveau du jeu J. Le jeu J est inférieur à un jeu maximal Jmax donné, grâce à quoi le passage de l'air de fuite à travers les trous de décharge 78 est favorisé, et l'effet de ventilation du mélange air/huile dans la cavité annulaire 36 est réduit. Les valeurs de jeu minimal Jmin et de jeu maximal Jmax sont déterminées en fonction du dimensionnement du palier 20 et de son environnement.

Les gouttelettes d'huile, centrifugées et ventilées de part et d'autre de la collerette radiale 70, sont ensuite collectées et réunies par la gorge annulaire 34, puis l'huile est évacuée vers l'enceinte contenant de l'huile 82, par l'intermédiaire des passages traversants 38.

Du côté de la deuxième face 74, la forme inclinée de celle-ci permet aux gouttelettes d'huile de s'en détacher. Ainsi, il est possible d'éviter une dissipation de chaleur au niveau de cette deuxième face 74, qui se produirait sous l'effet d'un frottement si les gouttelettes d'huile coulaient le long de cette deuxième face 74.

Par ailleurs, lors de la rotation de la première bague, le jeu J et les trous de décharge 78 fournissent une dépression d'air dans la cavité d'huile annulaire 34, à la sortie de l'interface de friction, ainsi qu'une circulation d'air supplémentaire selon la direction allant de la première face 72 de la collerette radiale 70 vers sa deuxième face 74 (flèche 99). Par suite les fuites d'huile selon la direction inverse à travers l'interface de friction vers la cavité d'air annulaire 59 sont encore réduites, et l'évacuation des gouttelettes d'huile vers la gorge annulaire 34 est encore améliorée.

Dans le même temps, en présence d'une deuxième bague 50 selon l'aspect complémentaire de l'invention, c'est à dire comportant des parties en saillie 54 disposées au voisinage de la première bague 40, et de préférence contre celle-ci, il se crée, lors de la rotation des première et deuxième bagues 40, 50, une surpression d'air dans la cavité d'air annulaire 59 contre le joint d'étanchéité 66. Par suite, la circulation d'air provenant du jeu circonférentiel 58 à travers la cavité d'air annulaire 59 puis à travers l'interface de friction est encore améliorée. Cette circulation d'air a pour effet avantageux, d'une part de s'opposer aux fuites d'huile à travers l'interface de friction vers la cavité d'air annulaire 59, et d'autre part d'améliorer la circulation d'air qui entraîne les gouttelettes d'huiles à travers le jeu J. Le dimensionnement des parties en saillie 54 est établi de manière appropriée en fonction des effets recherchés.

Les caractéristiques de l'invention qui viennent d'être décrites, à savoir la présence d'une collerette radiale 70 sur la première bague 40, ladite collerette radiale 70 ayant une deuxième face 74 inclinée et des trous de décharge 78, contribuent, prises isolément ou en combinaison entre elles, à favoriser la circulation d'air de l'interface de friction vers la cavité d'huile annulaire, et à entraîner de manière plus efficace les gouttelettes d'huile vers la gorge annulaire collectrice 34, tout en limitant la dissipation de chaleur au niveau de l'interface de friction et sur ladite collerette radiale 70, et donc permet également d'atteindre les buts recherchés.

De plus, la caractéristique d'un aspect complémentaire de l'invention qui vient d'être décrite, à savoir la présence de parties en saillie 54 sur la deuxième bague 50, contribue également à favoriser cette circulation d'air de l'interface de friction vers la cavité d'huile annulaire, par aspiration d'air de l'autre côté du joint d'étanchéité 66, et donc permet également d'atteindre les buts recherchés.

Enfin, en présence de la première bague 40 et de la deuxième bague 50, les effets recherchés se combinent et s'amplifient. On s'oppose de manière encore plus efficace aux fuites d'huile vers la chambre d'air annulaire 59. Les performances du dispositif d'étanchéité sont encore améliorées. La consommation d'huile est davantage contrôlée. La pollution atmosphérique est davantage réduite. L'usure et la détérioration du joint d'étanchéité sont encore mieux évitées, et sa durée de vie est prolongée. Les risques de balourd de l'arbre sont encore diminués.

## Revendications

1. Dispositif d'étanchéité pour un palier (20) comportant une bague intérieure de palier (24) supportant un arbre (12) et une bague extérieure de palier (26) solidaire d'un carter (30), ledit dispositif d'étanchéité comportant :
- une première bague (40) et une deuxième bague (50), entraînées en rotation avec l'arbre (12), la première bague (40) étant agencée entre la deuxième bague (50) et la bague intérieure de palier (24), et la première bague (40) se trouvant en regard d'une cavité d'huile annulaire (36) du carter (30),
- un joint d'étanchéité (66), solidaire d'une pièce fixe (60) entourant la deuxième bague (50), ledit joint d'étanchéité (66) étant maintenu au contact de la première bague (40),
- un circuit d'huile (14, 42) pour alimenter en huile de lubrification une interface de friction entre le joint d'étanchéité (66) et la première bague (40),
la première bague (40) étant prolongée, radialement vers l'extérieur dans ladite cavité d'huile annulaire (36), par une collerette radiale (70) s'étendant sensiblement au-delà de l'interface de friction, dispositif d'étanchéité **caractérisé en ce que** ladite collerette radiale (70) a une première face (72) dirigée du côté du joint d'étanchéité (66) et une deuxième face (74) sensiblement opposée axialement à sa première face (72), et **en ce que** ladite première face (72) se trouve en regard d'une paroi intérieure (31) de la cavité d'huile annulaire (36) faisant partie du carter (30).

2. Dispositif d'étanchéité selon la revendication 1, **caractérisé en ce que** le jeu (J) entre la première face (72) de la collerette radiale (70) et ladite paroi (31) de la cavité d'huile annulaire (36) est supérieur à un jeu minimal donné.

3. Dispositif d'étanchéité selon la revendication 2, **caractérisé en ce que** ledit jeu (J) entre la première face (72) de la collerette radiale (70) et la paroi (31) de carter (30) environnant est inférieur à un jeu maximal donné.

4. Dispositif d'étanchéité selon l'une quelconque des revendications 1 à 3, dans lequel ledit circuit d'huile (14, 42) comporte au moins un canal d'injection pour joint (42) amenant de l'huile de lubrification depuis une face radialement intérieure (44) de la première bague (40) jusqu'à l'interface de friction entre ladite première bague (40) et le joint d'étanchéité (66), **caractérisé en ce que** ledit canal d'injection pour joint (42) comporte une dérivation (48) qui débouche du côté du palier (20).

5. Dispositif d'étanchéité selon l'une quelconque des revendications 1 à 4, **caractérisé en ce que** la collerette radiale (70) est sensiblement tronconique, sa deuxième face (74) étant inclinée de telle sorte qu'elle se rapproche axialement du joint d'étanchéité (66) au fur et à mesure qu'elle s'éloigne radialement de l'arbre (12).

6. Dispositif d'étanchéité selon l'une quelconque des revendications 1 à 5, **caractérisé en ce que** la collerette radiale (70) présente des trous de décharge (78) répartis circonférentiellement, qui permettent un passage d'air entre sa première face (72) et sa deuxième face (74).

7. Dispositif d'étanchéité selon l'une quelconque des revendications 1 à 6, **caractérisé en ce que** la deuxième bague (50) comporte des parties en saillie (54), réparties circonférentiellement sur sa face périphérique extérieure (52) au voisinage de la première bague (40).

8. Dispositif d'étanchéité selon la revendication 7, **caractérisé en ce que** lesdites parties en saillie (54) sont en contact avec la première bague (40).

9. Turbomachine, **caractérisée en ce qu'**elle comporte au moins un dispositif d'étanchéité selon l'une quelconque des revendications 1 à 8.

## Claims

1. Sealing device for a bearing (20) comprising an inner bearing race (24) supporting a shaft (12) and an outer bearing race (26) fixed to a casing (30), the said sealing device comprising:
- a first ring (40) and a second ring (50) which are rotated with the shaft (12), the first ring (40) being arranged between the second ring (50) and the inner bearing race (24), and the first ring (40) being situated opposite an annular oil cavity (36) of the casing (30),
- a seal (66) fixed to a stationary part (60) surrounding the second ring (50), the said seal (66) being maintained in contact with the first ring (40),
- an oil circuit (14, 42) for supplying a friction interface between the seal (66) and the first ring (40) with lubricating oil,
the first ring (40) being radially outwardly extended into the said annular oil cavity (36) by way of a radial flange (70) extending substantially beyond the friction interface, which sealing device is **characterized in that** the said radial flange (70) has a first, face (72) directed towards the seal (66) and a second face (74) substantially axially opposed to its first face (72), and **in that** the said first face (72) is situated opposite an inner wall (31) of the annular oil cavity (36) forming part of the casing (30).

2. Sealing device according to Claim 1, **characterized in that** the clearance (J) between the first face (72) of the radial flange (70) and the said wall (31) of the annular oil cavity (36) is greater than a given minimum clearance.

3. Sealing device according to Claim 2, **characterized in that** the said clearance (J) between the first face (72) of the radial flange (70) and the wall (31) of the surrounding casing (30) is less than a given maximum clearance.

4. Sealing device according to any one of Claims 1 to 3, in which the said oil circuit (14, 42) comprises at least one seal injection duct (42) feeding lubricating oil from a radially inner face (44) of the first ring (40) to the friction interface between the said first ring (40) and the seal (66), **characterized in that** the said seal injection duct (42) comprises a branch (48) which emerges towards the bearing (20).

5. Sealing device according to any one of Claims 1 to 4, **characterized in that** the radial flange (70) is substantially frustoconical, its second face (74) being inclined such that it axially approaches the seal (66) as it moves radially away from the shaft (12).

6. Sealing device according to any one of Claims 1 to 5, **characterized in that** the radial flange (70) has circumferentially distributed discharge holes (78) which allow air to pass between its first face (72) and its second face (74).

7. Sealing device according to any one of Claims 1 to 6, **characterized in that** the second ring (50) comprises projecting parts (54) which are distributed circumferentially over its outer peripheral face (52) in the vicinity of the first ring (40).

8. Sealing device according to Claim 7, **characterized in that** the said projecting parts (54) are in contact with the first ring (40).

9. Turbomachine, **characterized in that** it comprises at least one sealing device according to any one of Claims 1 to 8.

## Patentansprüche

1. Dichtungsvorrichtung für ein Wellenlager (20) mit einem Lagerinnenring (24), in dem eine Welle (12) gelagert ist, und einem Lageraußenring (26), der mit einem Gehäuse (30) fest verbunden ist, wobei diese Dichtungsvorrichtung aufweist:
- einen ersten Ring (40) und einen zweiten Ring (50), die mit der Welle (12) in Drehbewegung angetrieben werden, wobei der erste Ring (40) zwischen dem zweiten Ring (50) und dem Lagerinnenring (24) angeordnet ist, und wobei sich der erste Ring (40) einem ringförmigen Öl-Hohlraum (36) des Gehäuses (30) gegenüber befindet,
- eine Dichtung (66), die mit einem feststehenden Teil (60) fest verbunden ist, welches den zweiten Ring (50) umgibt, wobei diese Dichtung (66) in Kontakt mit dem ersten Ring (40) gehalten wird,
- einen Ölkreislauf (14, 42) zur Schmierölversorgung einer Reibungs-Grenzfläche zwischen der Dichtung (66) und dem ersten Ring (40),
wobei der erste Ring (40) in radialer Richtung nach außen in den genannten Öl-Hohlraum (36) hinein durch einen radialen Ansatz (70) verlängert wird, der sich im Wesentlichen jenseits der Reibungs-Grenzfläche erstreckt,
**dadurch gekennzeichnet,**
**dass** dieser erste Ring (40) eine erste Seite (72) aufweist, die zu der Dichtung (66) hin gerichtet ist, und eine zweite Seite (74) aufweist, die im Wesentlichen axial entgegengesetzt zu seiner ersten Seite (72) ausgerichtet ist, und dass sich diese erste Seite (72) gegenüber einer Innenwand (31) des ringförmigen Öl-Hohlraums (36) befindet, der Teil des Gehäuses (30) ist.

2. Dichtungsvorrichtung nach Anspruch 1,
**dadurch gekennzeichnet,**
**dass** das Spiel (J) zwischen der ersten Seite (72) des radialen Ansatzes (70) und der genannten Wand (31) des ringförmigen Öl-Hohlraums (36) größer ist als ein gegebenes Minimalspiel.

3. Dichtungsvorrichtung nach Anspruch 2,
**dadurch gekennzeichnet,**
**dass** das Spiel (J) zwischen der ersten Seite (72) des radialen Ansatzes (70) und der Wand (31) des umliegenden Gehäuses (30) kleiner ist als ein gegebenes Maximalspiel.

4. Dichtungsvorrichtung nach einem der Ansprüche 1 bis 3, bei der der genannte Ölkreislauf (14, 42) mindestens einen Dichtungs-Einspritzkanal (42) aufweist, der Schmieröl von einer radial innen liegenden Seite (44) des ersten Rings (40) bis zu der Reibungs-Grenzfläche zwischen diesem ersten Ring (40) und der Dichtung (66) zuführt,
**dadurch gekennzeichnet,**
**dass** dieser Dichtüngs-Einspritzkanal (42) eine Abzweigung (48) aufweist, die zum Wellenlager (20) hin mündet.

5. Dichtungsvorrichtung nach einem der Ansprüche 1 bis 4,
**dadurch gekennzeichnet,**
**dass** der radiale Ansatz (70) im Wesentlichen kegelstumpfförmig ausgeführt ist, wobei seine zweite Seite (74) dergestalt geneigt ist, dass sie sich in dem Maße, wie sie sich radial von der Welle (12) entfernt, axial an die Dichtung (66) annähert.

6. Dichtungsvorrichtung nach einem der Ansprüche 1 bis 5,
**dadurch gekennzeichnet,**
**dass** der radiale Ansatz (70) über den Umfang verteilt Ablasslöcher (78) aufweist, die einen Luftdurchgang zwischen seiner ersten Seite (72) und seiner zweiten Seite (74) ermöglichen.

7. Dichtungsvorrichtung nach einem der Ansprüche 1 bis 6,
**dadurch gekennzeichnet,**
**dass** der zweite Ring (50) Vorsprünge (54) aufweist, die im Bereich des ersten Rings (40) über seine äußere Umfangsseite (52) verteilt angeordnet sind.

8. Dichtungsvorrichtung nach Anspruch 7,
**dadurch gekennzeichnet,**
**dass** sich diese Vorsprünge (54) in Kontakt mit dem ersten Ring (40) befinden.

9. Turbomaschine,
**dadurch gekennzeichnet,**
**dass** sie mindestens eine Dichtungsvorrichtung nach einem der Ansprüche 1 bis 8 aufweist.
